# EUROPÄISCHE PATENTSCHRIFT

(11) **EP 2 172 660 B1**
(45) Veröffentlichungstag und Bekanntmachung des Hinweises auf die Patenterteilung: **27.04.2011**
(21) Anmeldenummer: 08017503.7
(22) Anmeldetag: 06.10.2008
(51) Int. Cl.: F16B 25/10, F16B 33/00, F16B 35/06

(54) **Bohrschraube mit schneidender Scheibe**
Drill bit with cutting disc
Vis de forage dotée d'une plaque coupante

(43) Veröffentlichungstag der Anmeldung: 07.04.2010
(73) Patentinhaber: EJOT Baubefestigungen GmbH, D-57334 Bad Laasphe (DE)
(72) Erfinder: Middleton, Chris, Doncaster DN9 2LW (GB); Bowhay, Richard, Huddersfield HD8 9TS (GB); Mack, Brian, West Yorks WF6 1ZW (GB); Pearson, Simon, Leeds LS25 1AR (GB)
(74) Vertreter: Heselberger, Johannes

(56) Entgegenhaltungen:
- EP-A- 0 811 734
- EP-A- 1 473 471
- DE-U1- 20 011 479
- US-A- 4 900 208

## Beschreibung

Die vorliegende Erfindung betrifft eine Schraube zum Befestigen von Dämmstoffplatten, welche regelmäßig beidseitig angeordnete Deckschichten aus Kunststoff und/oder Metall aufweisen, an einer Unterkonstruktion wie beispielsweise einem Profilblech, einem Metall- oder Holzträger.

Eine gattungsgemäße Schraube ist aus der EP 1 473 471 B1 bekannt. Die Schraube umfasst eine Bohr- oder Eindringspitze, einen mit einem Gewinde versehenen Schaft sowie eine Unterlegscheibe aus Metall. Die Unterlegscheibe ist dabei verdrehfest an der Schraube angeordnet, wobei zumindest ein Teilabschnitt in Eindrehrichtung der Schraube spitzwinklig gegen die Bohr- oder Eindringspitze hin abgebogen ist und wobei der freie Endabschnitt dieses abgebogenen Teilabschnittes eine schneidenartige Ausbildung aufweist. Die Unterlegscheibe kann als Kopf der Schraube ausgebildet sein oder aber einstückig mit dem Kopf verbunden sein. Beim Eindrehen der Schraube übernimmt die Unterlegscheibe eine Bohrfunktion, wobei die an der Oberseite der Isolierplatte angeordnete Kunststofffolie bzw. - deckschicht durch den Schaft der Schraube und dessen Bohrteil aufgebohrt und so ein kleines Loch gebildet wird. Durch die schneidenartige Ausbildung des spitzwinklig abgebogenen Teilabschnittes wird eine Art radial auskragender Einschnitt gebildet, welcher zum Einführen der Unterlegscheibe in den Bereich unterhalb der Kunststoffdeckschicht dient. Die Unterlegscheibe windet sich dann beim Drehen der Schraube korkenzieherartig oder nach Art eines Rettichschneiders in den Isolierschaum, bis die Schreibe und somit dann auch der Schraubenkopf auf der unteren, als Metallplatte ausgeführten, Deckschicht zur Auflage gelangen. Abschließend werden das in der Kunststofffolie gebildete Loch und der Einschnitt mittels einer aufzuklebenden Abdeckung verschlossen.

Als nachteilig wird bei dieser Schraube angesehen, dass aufgrund der aus Metall gebildeten Unterlegscheibe Wärmebrücken gebildet werden und dass es durch das spiralenförmige Einschneiden der Kunststoffdeckschicht leicht zu einem Ablösen derselben kommen kann. Weiterhin kann es, wenn die Schraube an der unteren Metalldeckschicht angelangt, aufgrund des Metall-auf-Metall-Kontakts zu einer Beschädigung der Metalldeckschicht kommen. Außerdem muss, um die ggf. flexibel ausgestaltete Unterlegscheibe flach in Anlage an die untere Metalldeckschicht zu bringen, eine relativ große Kraft aufgewendet werden, wobei auch die Gefahr eines Umstülpens der Unterlegscheibe besteht. Darüber hinaus hat sich gezeigt, dass durch die gewundene Unterlegscheibe die Schraube beim Setzen leicht vom vorgesehenen Weg abkommt.

Aufgabe der vorliegenden Erfindung ist es, die vorstehend beschriebenen Nachteile des Stands der Technik zu überwinden.

Diese Aufgabe wird erfindungsgemäß gelöst durch eine Bohrschraube zur Befestigung von Dämmstoffplatten mit ggf. beidseitig angeordneten Deckschichten, welche aus einem Schraubenkopf und einem Schraubenschaft besteht, wobei der Schraubenkopf eine Eingriffsmöglichkeit für ein Schraubwerkzeug und eine Schneidscheibe aufweist und wobei der Schraubenschaft ein Gewinde und eine Bohrspitze aufweist, wobei der Schraubenkopf aus Kunststoff gebildet ist und wobei die Schneidscheibe an ihrer Unterseite rippenartige Schneidvorrichtungen aufweist; sowie durch ein Verfahren mit den Schritten a) Einstecken der Bohrschraube ggf. durch eine Deckschicht hindurch in die Dämmstoffplatte, b) Einstechen in die Dämmstoffplattenoberfläche bzw. die Deckschicht mit vorzugsweise am Umfang der Schneidscheibe angeordneten Vorsprüngen, und c) Ausfräsen eines Lochs mit Schneidvorrichtungen, welche an der Unterseite der Schneidscheibe angeordnet sind und so mit den am Umfang der Schneidscheibe angeordneten Vorsprüngen zusammenwirken, dass Fräsabfälle nach außen abgeführt werden.

In einer bevorzugten Ausführungsform der Erfindung sind zwischen den rippenartigen Schneidvorrichtungen jeweils Vorsprünge angeordnet, die vom äußeren Umfang der Schneidscheibe abstehen. Die abstehenden Vorsprünge dienen zum glatten Einschneiden insbesondere der Kunststoffdeckschicht, damit es später zu keinen oder nur geringfügigen Ablöseerscheinungen kommt. Bevorzugt weisen die Vorsprünge, die vom äußeren Umfang der Schneidscheibe abstehen, nach unten gerichtete Spitzen auf. Durch diese Maßnahme wird das glatte Einschneiden der Kunststoffdeckschicht besonders einfach und effektiv erreicht.

In einer anderen bevorzugten Ausführungsform der Erfindung stehen die rippenartigen Schneidvorrichtungen in Eindrehrichtung gesehen zunehmend von der Schneidscheibe ab, bis sie in einen der Vorsprünge münden und die nächste rippenartige Schneidvorrichtung beginnt. Weiter bevorzugt nehmen die rippenartigen Schneidvorrichtungen in Eindrehrichtung gesehen von einem Vorsprung zum nächsten Vorsprung an Dicke zu. Durch diese Ausgestaltung der Schneidvorrichtungen kann ein besonders wirksamer Fräseffekt erzielt werden.

In einer anderen bevorzugten Ausführungsform der Erfindung ist zwischen dem Schraubenschaft und der Schneidscheibe eine ringförmige Aussparung angeordnet. Durch diese Ausgestaltung des Kunststoffschraubenkopfs wird ein Raum zur Aufnahme eines Teils des Frässtaubs geschaffen.

In einer wiederum anderen bevorzugten Ausführungsform der Erfindung besteht die Eingriffsmöglichkeit am Schraubenkopf für das Schraubwerkzeug aus einem geeigneten Vielzahnprofil, wie etwa einem Außentorx, einem Außensechskant oder einem XZN-Profil. Es sind allerdings auch Eingriffsmöglichkeiten denkbar, welche als Innentorx, Innensechskant oder als anderweitiges Innenvielzahnprofil (z. B. XZN) ausgebildet sind. Insbesondere kann die Eingriffsmöglichkeit am Schraubenkopf sowohl einen Innen- als auch einen Außeneingriff umfassen. Damit ist die Bedienperson flexibel in der Wahl des Schraubaufsatzes.

In einer weiteren bevorzugten Ausführungsform der Erfindung erstreckt sich das Gewinde über die Hälfte bis ¾ der Länge des Schraubenschafts. Der restliche Schaft und die Bohrerspitze sind daher gewindefrei und ermöglichen ein ausreichend tiefes Einstechen in das Dämmstoffmaterial, um eine sichere Führung der Schraube zu gewährleisten.

In einer anderen bevorzugten Ausführungsform der Erfindung weist das Gewinde mehrere Gewindegänge auf. Diese verlaufen vorzugsweise ineinander, weshalb die Schraube besonders schnell eingedreht werden kann.

In einer noch weiteren bevorzugten Ausführungsform der Erfindung bildet die Schneidscheibe mit ihrer Oberseite einen umlaufenden Vorsprung angrenzend an die Eingriffsmöglichkeit, der zur Anlage eines Schraubwerkzeugs dient. Wenn beispielsweise Außentorx- bzw. Außenvielzahnprofile verwendet werden, kann auf diese Weise der Setzvorgang erleichtert werden.

In einer wiederum anderen bevorzugten Ausführungsform der Erfindung liegt das Verhältnis zwischen Kerndurchmesser und Außendurchmesser des Gewindeschaftteils zwischen 0,5 und 0,9. Durch diese Ausgestaltung wird insbesondere eine hohe Sicherheit gegen ein Ausreißen der Schraube gewährleistet.

Nachfolgend wird die Erfindung anhand der in den folgenden Zeichnungen dargestellten Ausführungsbeispiele näher erläutert. Es zeigen:
- Fig. 1:: eine Seitenansicht einer erfindungsgemäßen Bohrschraube;
- Fig. 2a:: eine perspektivische Ansicht eines Schraubenkopfs einer erfindungsge- mäßen Bohrschraube;
- Fig. 2b:: eine Draufsicht auf einen Schraubenkopf einer erfindungsgemäßen Bohr- schraube;
- Fig. 3:: eine perspektivische Unteransicht eines Schraubenkopfs einer erfin- dungsgemäßen Bohrschraube.

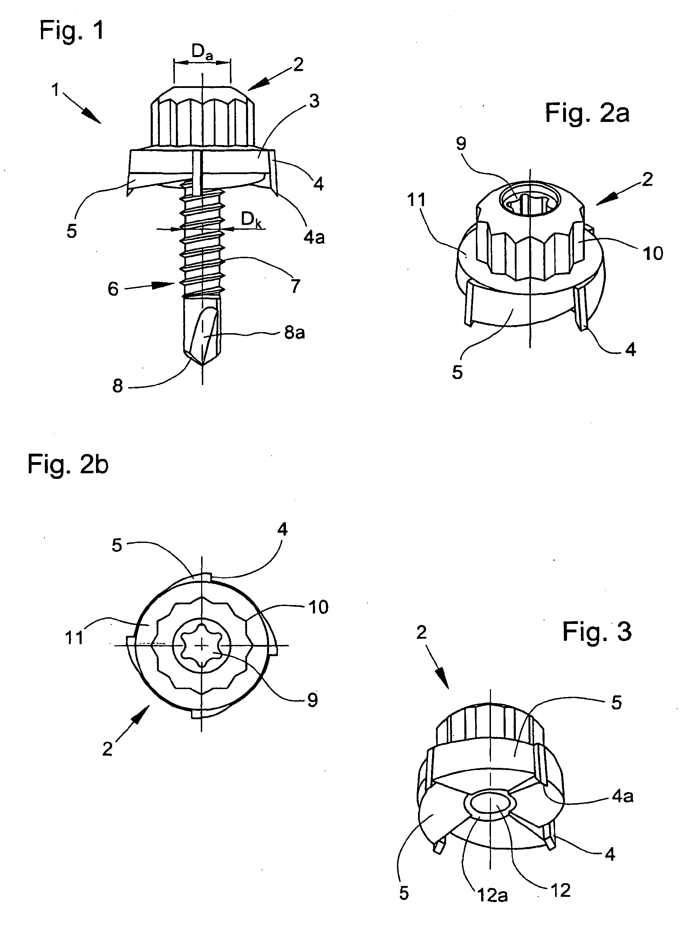

In Fig. 1 wird eine erfindungsgemäße Bohrschraube 1 zur Befestigung von Dämmstoffplatten mit ggf. beidseitig angeordneten Deckschichten gezeigt. Die Bohrschraube 1 besteht aus einem Schraubenkopf 2 und einem Schraubenschaft 6, wobei der Schraubenkopf 2 eine Eingriffsmöglichkeit für ein Schraubwerkzeug und eine Schneidscheibe 3 aufweist und wobei der Schraubenschaft 6 ein Gewinde 7 und eine Bohrspitze 8 aufweist. Der Schraubenkopf 2 ist aus Kunststoff gebildet und die Schneidscheibe 3 weist an ihrer Unterseite rippenartig ausgestaltete Schneidvorrichtungen 5 auf. Zu erkennen sind des Weiteren Vorsprünge 4, welche jeweils zwischen den rippenartig ausgestalteten Schneidvorrichtungen 5 angeordnet sind und welche vom äußeren Umfang der Schneidscheibe 3 abstehen. Üblicher Weise sind vier Vorsprünge bzw. Schneidvorrichtungen 5 vorgesehen, es sind aber auch Ausführungsformen mit zwei, drei oder fünf bis acht Vorsprüngen denkbar. Die flügelartig ausgestalteten Vorsprünge 4 weisen im Übrigen regelmäßig nach unten gerichtete Spitzen 4a auf. Das Gewinde 7 erstreckt sich, wie zu sehen, in etwa über die Hälfte bis ¾ der Länge des Schraubenschafts 6, damit die daran anschließende Bohrspitze 8 ausreichend lang ausgebildet werden kann und mit einer ausreichend lang ausgeprägten Schlifffläche bzw. Einkerbung 8a versehen werden kann. Das gezeigte Gewinde 7 ist eingängig und weist ein Verhältnis von Kerndurchmesser Dk zu Außendurchmesser Da von etwa 0,5 bis etwa 0,9 auf. Es sind, in Abhängigkeit von der Gewindesteigung, allerdings auch mehrgängige (ineinander verlaufende) Gewinde denkbar.

Anhand der Figuren 2a und 2b wird im Folgenden der Schraubenkopf 2 näher erläutert. Es sind zwei Eingriffsmöglichkeiten für ein Schraubwerkzeug vorgesehen, nämlich ein Innentorx 9 und ein Außenvielzahnprofil 10. Diese Ausgestaltung sorgt dafür, dass der Schraubaufsatz flexibel gewählt werden kann. Die Schneidscheibe 3 bildet mit ihrer Oberseite einen umlaufenden Vorsprung 11 angrenzend an die Eingriffsmöglichkeit bzw. das Außenvielzahnprofil 10, welcher ggf. zur Anlage eines Schraubwerkzeugs dient. Die vier rippenartigen Schneidvorrichtungen 5 stehen, wie besonders gut in Fig. 2b zu sehen, in Eindrehrichtung gesehen zunehmend von der Schneidscheibe 3 ab (d. h. nach außen), bis sie in einen der Vorsprünge 4 münden bzw. übergehen und die nächste rippenartige Schneidvorrichtung 5 beginnt.

In Fig. 3 wird gezeigt, dass die rippenartigen Schneidvorrichtungen 5 in Eindrehrichtung nicht nur zunehmend nach außen abstehen, sondern dass sie jeweils auch gleichzeitig in Eindrehrichtung von einem Vorsprung 4 zum nächsten Vorsprung 4 an Dicke zunehmen (d. h. nach unten), etwa in der Form einer gekrümmten schiefen Ebene. Des Weiteren erkennt man, dass zwischen der Öffnung 12 für den Schaft 6 und der Innenseite des Schraubenkopfs 2 ein Ringspalt 12a verbleibt, wenn der Schaft, wie in Fig. 1, eingesetzt ist.

Bei der Montage der Dämmstoffplatten mit den Kunststoff- und/oder Metalldeckschichten mittels der erfindungsgemäßen Bohrschraube 1 und einem Schraubwerkzeug wird zunächst die Bohrschraube 1 ggf. durch eine Deckschicht hindurch in die Dämmstoffplatte eingesteckt. Anschließend wird in die Dämmstoffplattenoberfläche bzw. die Deckschicht mit vorzugsweise am Umfang der Schneidscheibe 3 angeordneten Vorsprüngen 4 bzw. deren Spitzen 4a eingestochen. Dann erfolgt das Ausfräsen eines Lochs mit den Schneidvorrichtungen 5, welche an der Unterseite der Schneidscheibe 3 angeordnet sind. Diese wirken - aufgrund ihrer vorstehend erwähnten Formgebung - so mit den am Umfang der Schneidscheibe 3 angeordneten Vorsprüngen 4 zusammen, dass Fräsabfälle bzw. Frässtaub nach außen abgeführt werden. Die vorstehend genannten Schritte bei der Montage können auch in einer anderen Reihenfolge oder aber gleichzeitig ausgeführt werden.

## Patentansprüche

1. Bohrschraube (1) zur Befestigung von Dämmstoffplatten mit ggf. beidseitig angeordneten Deckschichten, welche aus einem Schraubenkopf (2) und einem Schraubenschaft (6) besteht, wobei der Schraubenkopf (2) eine Eingriffsmöglichkeit für ein Schraubwerkzeug und eine Schneidscheibe (3) aufweist und wobei der Schraubenschaft (6) ein Gewinde (7) und eine Bohrspitze (8) aufweist,
**dadurch gekennzeichnet, dass**
der Schraubenkopf (2) aus Kunststoff gebildet ist und dass die Schneidscheibe (3) an ihrer Unterseite rippenartige Schneidvorrichtungen (5) zum Ausfräsen eines Lochs in dem Dämmmaterial aufweist.

2. Bohrschraube (1) nach Anspruch 1, **dadurch gekennzeichnet, dass** zwischen den rippenartigen Schneidvorrichtungen (5) jeweils Vorsprünge (4) angeordnet sind, die vom äußeren Umfang der Schneidscheibe (3) abstehen.

3. Bohrschraube (1) nach Anspruch 2, **dadurch gekennzeichnet, dass** die Vorsprünge (4), die vom äußeren Umfang der Schneidscheibe (3) abstehen, nach unten gerichtete Spitzen (4a) aufweisen.

4. Bohrschraube (1) nach einem der vorhergehenden Ansprüche, **dadurch gekennzeichnet, dass** die rippenartigen Schneidvorrichtungen (5) in Eindrehrichtung gesehen zunehmend von der Schneidscheibe (3) abstehen, bis sie in einen der Vorsprünge (4) münden und die nächste rippenartige Schneidvorrichtung (5) beginnt.

5. Bohrschraube (1) nach einem der vorhergehenden Ansprüche, **dadurch gekennzeichnet, dass** die rippenartigen Schneidvorrichtungen (5) in Eindrehrichtung gesehen von einem Vorsprung (4) zum nächsten Vorsprung (4) an Dicke zunehmen.

6. Bohrschraube (1) nach einem der vorhergehenden Ansprüche, **dadurch gekennzeichnet, dass** zwischen dem Schraubenschaft (6) und der Schneidscheibe (3) eine ringförmige Aussparung (12) angeordnet ist.

7. Bohrschraube (1) nach einem der vorhergehenden Ansprüche, **dadurch gekennzeichnet, dass** die Eingriffsmöglichkeit am Schraubenkopf (2) für das Schraubwerkzeug aus einem geeigneten Vielzahnprofil (9; 10) besteht.

8. Bohrschraube (1) nach einem der vorhergehenden Ansprüche, **dadurch gekennzeichnet, dass** sich das Gewinde (7) über die Hälfte bis ¾ der Länge des Schraubenschafts (6) erstreckt.

9. Bohrschraube (1) nach einem der vorhergehenden Ansprüche, **dadurch gekennzeichnet, dass** das Gewinde (7) mehrere Gewindegänge aufweist.

10. Bohrschraube (1) nach einem der vorhergehenden Ansprüche, **dadurch gekennzeichnet, dass** die Schneidscheibe(3) mit ihrer Oberseite einen umlaufenden Vorsprung (11) angrenzend an die Eingriffsmöglichkeit (10) bildet, der zur Anlage eines Schraubwerkzeugs dient.

11. Bohrschraube (1) nach einem der vorhergehenden Ansprüche, **dadurch gekennzeichnet, dass** das Verhältnis zwischen Kerndurchmesser Dk und Außendurchmesser Da des Gewindes (7) zwischen 0,5 und 0,9 liegt.

12. Verfahren zur Befestigung von Dämmstoffplatten mit ggf. beidseitig angeordneten Deckschichten, mit einem Schraubwerkzeug und einer Bohrschraube (1), welche aus einem Schraubenkopf (2) und einem Schraubenschaft (6) besteht, wobei der Schraubenkopf (2) eine Eingriffsmöglichkeit für ein Schraubwerkzeug und eine Schneidscheibe (3) aufweist und wobei der Schraubenschaft (6) ein Gewinde (7) und eine Bohrspitze (8) aufweist, wobei das Verfahren die folgenden Schritte umfasst:
a) Einstecken der Bohrschraube (1) ggf. durch eine Deckschicht hindurch in die Dämmstoffplatte;
b) Einstechen in die Dämmstoffplattenoberfläche bzw. die Deckschicht mit vorzugsweise am Umfang der Schneidscheibe (3) angeordneten Vorsprüngen (4);
c) Ausfräsen eines Lochs mit rippenartigen Schneidvorrichtungen (5), welche an der Unterseite der Schneidscheibe (3) angeordnet sind und so mit den am Umfang der Schneidscheibe (3) angeordneten Vorsprüngen (4) zusammenwirken, dass Fräsabfälle nach außen abgeführt werden.

## Claims

1. Drill screw (1) for mounting of insulating panels with, if applicable, double-sided arranged covering layers, which consists of a screw head (2) and a screw shaft (6), wherein the screw head (2) comprises an engagement possibility for a screwing tool as well as a cutting disc (3) and wherein the screw shaft (6) comprises a thread (7) and a drilling bit (8),
**characterized in that**
the screw head (2) is formed of plastic material and that the cutting disc (3) comprises at its underside rib-like cutting devices (5) for milling out a hole in the insulating material.

2. Drill screw (1) according to claim 1, **characterized in that** between the rib-like cutting devices (5) respectively projections (4) are arranged, which protrude from the outer circumference of the cutting disc (3)

3. Drill screw (1) according to claim 2, **characterized in that** the projections (4) which protrude from the outer circumference of the cutting disc (3) comprise downwardly directed tips (4a).

4. Drill screw (1) according to one of the proceeding claims, **characterized in that** the rib-like cutting devices (5) increasingly protrude from the cutting disc (3), seen in screwing-in direction, until they end in one of the projections (4) and the next rib-like cutting device (5) begins.

5. Drill screw (1) according to one of the preceding claims, **characterized in that** the rib-like cutting devices (5), seen in screwing-in direction, increase in thickness from one projection (4) to the next projection (4).

6. Drill screw (1) according to one of the preceding claims, **characterized in that** between the screw shaft (6) and the cutting disc (3) a ring-shaped recess (12) is arranged.

7. Drill screw (1) according to one of the preceding claims, **characterized in that** the engagement possibility at the screw head (2) for the screwing tool consists of an appropriate multiple tooth profile (9; 10).

8. Drill screw (1) according to one of the preceding claims, **characterized in that** the thread (7) extends over half to ¾ of the length of the screw shaft (6).

9. Drill screw (1) according to one of the preceding claims, **characterized in that** the thread (7) comprises multiple convolutions.

10. Drill screw (1) according to one of the preceding claims, **characterized in that** the cutting disc (3) forms with its upper side a circumferential projection (11) adjacent the engagement possibility (10), which serves for an abutment of a screwing tool.

11. Drill screw (1) according to one of the preceding claims, **characterized in that** the ratio between core diameter Dk and outer diameter Da of the thread (7) is between 0.5 and 0.9.

12. Method for mounting of insulation panels with, if applicable, double-sided arranged covering layers, with a screwing tool and a drill screw (1) which consists of a screw head (2) and a screw shaft (6), wherein the screw head (2) comprises an engagement possibility for a screwing tool as well as a cutting disc (3) and wherein the screw shaft (6) comprises a thread (7) and a drilling bit (8), wherein the method comprises the following steps:
a) inserting the drill screw (1), if applicable through a covering layer into the insulating panel;
b) piercing the insulating panel surface respectively the covering layer with projections (4) preferably arranged at the circumference of the cutting disc (3);
c) milling out a hole with rib-like cutting devices (5) which are arranged at the underside of the cutting disc (3) and which interact with the projections arranged at the circumference of the cutting disc (3) in such a way that milling waste is discharged in outward direction.

## Revendications

1. Vis autoperceuse (1) pour la fixation de panneaux de matériau isolant munis de couches de recouvrement disposées éventuellement sur les deux faces, laquelle vis se compose d'une tête de vis (2) et d'un corps de vis (6), la tête de vis (2) comportant un moyen d'action pour un outil de vissage et un disque coupant (3), et le corps de vis (6) comportant un filetage (7) et une pointe de forage (8), **caractérisée en ce que** la tête de vis (2) est en matière plastique et **en ce que** le disque coupant (3) présente sur sa face inférieure des dispositifs de coupe (5) en forme de nervures pour fraiser un trou dans le matériau isolant.

2. Vis autoperceuse (1) selon la revendication 1, **caractérisée en ce que** des saillies (4) qui dépassent de la circonférence extérieure du disque coupant (3) sont disposées entre les dispositifs de coupe (5) en forme de nervures.

3. Vis autoperceuse (1) selon la revendication 2, **caractérisée en ce que** les saillies (4) qui dépassent de la circonférence extérieure du disque coupant (3) présentent des pointes (4a) dirigées vers le bas.

4. Vis autoperceuse (1) selon une des revendications précédentes, **caractérisée en ce que** les dispositifs de coupe (5) en forme de nervures s'écartent de plus en plus du disque coupant (3) par rapport à la direction de vissage jusqu'à ce qu'ils rencontrent une des saillies (4) et que le dispositif de coupe (5) en forme de nervures suivant commence.

5. Vis autoperceuse (1) selon une des revendications précédentes, **caractérisée en ce que** l'épaisseur des dispositifs de coupe (5) en forme de nervures augmente, par rapport à la direction de vissage, entre une saillie (4) et la suivante.

6. Vis autoperceuse (1) selon une des revendications précédentes, **caractérisée en ce qu'**un évidement annulaire (12) est ménagé entre le corps de vis (6) et le disque coupant (3).

7. Vis autoperceuse (1) selon une des revendications précédentes, **caractérisée en ce que** le moyen d'action disposé sur la tête de vis (2) pour l'outil de vissage est constitué par un profil denté (9 ; 10) approprié.

8. Vis autoperceuse (1) selon une des revendications précédentes, **caractérisée en ce que** le filetage (7) s'étend sur la moitié à ¾ de la longueur du corps de vis (6).

9. Vis autoperceuse (1) selon une des revendications précédentes, **caractérisée en ce que** le filetage (7) comporte plusieurs pas de filetage.

10. Vis autoperceuse (1) selon une des revendications précédentes, **caractérisée en ce que** le disque coupant (3) forme avec sa face supérieure une saillie (11) périphérique adjacente au moyen d'action (10) qui sert d'appui à un outil de vissage.

11. Vis autoperceuse (1) selon une des revendications précédentes, **caractérisée en ce que** le rapport entre diamètre de noyau Dk et diamètre extérieur Da du filetage (7) est compris entre 0,5 et 0,9.

12. Procédé de fixation de panneaux de matériau isolant munis de couches de recouvrement disposées éventuellement sur les deux faces, avec un outil de vissage et une vis autoperceuse (1), laquelle se compose d'une tête de vis (2) et d'un corps de vis (6), la tête de vis (2) comportant un moyen d'action pour un outil de vissage et un disque coupant (3), et le corps de vis (6) comportant un filetage (7) et une pointe de forage (8), lequel procédé comprend les étapes suivantes :
a) engagement de la vis autoperceuse (1) dans le panneau de matériau isolant, le cas échéant en traversant une couche de recouvrement ;
b) enfoncement dans la surface du panneau de matériau isolant ou la couche de recouvrement au moyen des saillies (4) disposées de préférence sur la circonférence du disque coupant (3) ;
c) fraisage d'un trou avec les dispositifs de coupe (5) en forme de nervures qui sont disposés sur la face inférieure du disque coupant (3) et qui coopèrent avec les saillies (4) disposées sur la circonférence du disque coupant (3), de façon à évacuer les déchets de fraisage vers l'extérieur.
